# EUROPÄISCHE PATENTANMELDUNG

(11) **EP 0 802 521 A2**
(43) Veröffentlichungstag der Anmeldung: **22.10.1997**
(21) Anmeldenummer: 97102161.3
(22) Anmeldetag: 12.02.1997
(51) Int. Cl.: G10K 9/122

(54) **Sensor zum Senden und/oder Empfangen akustischer Signale**

(30) Priorität: 16.04.1996 DE 19614885
(71) Anmelder: ROBERT BOSCH GMBH, 70442 Stuttgart (DE)
(72) Erfinder: Wannke, Dietmar, 72768 Reutlingen (DE); Knoll, Peter, Prof., 76275 Ettlingen (DE); Karr, Dieter, 75233 Tiefenbronn (DE); Munsch, Peter, 70469 Stuttgart (DE); Noll, Martin, Dr., 76461 Muggensturm (DE); Rapps, Peter, 76227 Karlsruhe (DE)

(57) **Zusammenfassung**

Für einen Sensor zum Senden und/oder Empfangen von akustischen Signalen, insbesondere im Ultraschallbereich wird vorgeschlagen, an einem Bereich der Wandung des topfförmigen Wandlergehäuses des Sensors eine Verdickung vorzusehen. Durch die Verdickung wird die Schwingmembran des Wandlergehäuses und damit die Sende-/Empfangskeule des Sensors asymmetrisch geformt. In weiterer Ausgestaltung der Erfindung ist vorgesehen, die Schwingmembran keilförmig auszubilden.

## Beschreibung

### Stand der Technik

Die Erfindung geht aus von einem Sensor zum Senden und/oder Empfangen akustischer Signale, insbesondere im Ultraschallbereich, nach der Gattung des Hauptanspruchs. Zum Senden und Empfangen von Ultraschall-Signalen (US-Signalen) sind schon topfförmige Sensoren bekannt, bei denen auf der Innenseite des Bodens ein Piezo-Element aufgebracht ist. Derartige Sensoren haben eine kreissymmetrische Abstrahlung ohne Vorzugsrichtung. Für bestimmte Anwendungsfälle, beispielsweise bei der Abstandsmessung von Kraftfahrzeugen ist erwünscht, die Empfindlichkeit des Sensors in der Horizontalen und/oder Vertikalen zu verformen. Aus der EP 75 302 B1 ist bekannt, zur Formung der Ausbreitungs- bzw. Empfangskeule zwei kreisabschnittsförmige Ultraschall-Dämpfungskörper gegenüberliegend in das Wandlergehäuse einzubringen. Mit Hilfe der Dämpfungskörper werden bestimmte Bereiche der schallerzeugenden-/aufnehmenden Membranfläche des Wandlergehäuses gedämpft. Es hat sich gezeigt, daß dadurch bei Oberwellen in bestimmten Abstrahlungswinkeln die Empfindlichkeit des Sensors deutlich reduziert werden kann. In der DE 41 20 681 A1 wird dagegen vorgeschlagen, die Schwingmembran mit einer unterschiedlichen Dicke derart auszubilden, daß sie nur in der Grundwelle schwingt, so daß keine Oberwellen entstehen, die gedämpft werden müssen. In diesem Fall werden keine Dämpfungskörper benötigt. Aus der DE 34 41 684 A1 wird ebenfalls ein Grundwellenschwinger vorgeschlagen, bei dem eine ellipsenförmige Schwingmembran vorgesehen ist.

Bei den bekannten Sensoren wird durch die vorgeschlagenen Maßnahmen erreicht, daß die Ausbreitungs- bzw. Empfangskeule der US-Signale im wesentlichen symmetrisch zur Hauptachse geformt wird. Bei der Anordnung eines derartigen US-Sensors insbesondere im Bereich der Stoßstange eines Kraftfahrzeuges kann es jedoch erwünscht sein, die Formung der Abstrahlungs- bzw. Empfangskeule asymmetrisch zur Abstrahlachse auszubilden, um unerwünschte Reflektionen von Fahrzeugteilen oder vom Straßenbelag oder Koppelungen von Nachbarsensoren zu unterdrücken. Auch kann es erwünscht sein, die Empfindlichkeit des Sensors im sogenannten toten Winkel des Fahrzeugs besonders zu steigern, um möglichst frühzeitig auch kleine Hindernisse zu erfassen. Dadurch wird die Gefahr einer Beschädigung beispielsweise beim Ein- oder Ausparken des Fahrzeugs zuverlässig vermieden.

### Vorteile der Erfindung

Der erfindungsgemäße Sensor zum Senden und/oder Empfangen akustischer Signale mit den kennzeichnenden Merkmalen des Anspruchs 1 hat demgegenüber den Vorteil, daß durch die Verdickung der Wandung an einer vorgegebenen Stelle die Ausbreitungs- bzw. Empfangskeule der akustischen Signale gezielt beeinflußt werden kann. Dies vereinfacht die Applikation an einem Fahrzeug, da in der Regel mehrere Sensoren verteilt an der Heck- oder Frontseite des Fahrzeugs angeordnet sind und deren Gesamtfunktion somit einfacher abgestimmt werden kann.

Durch die in den abhängigen Ansprüchen vorgeschlagenen Maßnahmen sind vorteilhafte Weiterbildungen und Verbesserungen des im Hauptanspruch angegebenen Sensors möglich. Besonders vorteilhaft ist, an der Innenseite der Wandung eine segmentförmige Verdickung anzuordnen. Diese Verdickung erzeugt eine Unsymmetrie in der Fläche der Schwingmembran, so daß auf diese Weise die Ausbreitung der Sende- bzw. Empfangskeule asymmetrisch ausgebildet werden kann.

Eine vorteilhafte Lösung ergibt sich auch dadurch, daß zwei gegenüberliegende Verdickungen der Wandung vorgesehen sind, die jedoch unterschiedlich dick ausgebildet sind. Je nach Ausbildung der Verdickungen wird die Membran beispielsweise etwa oval ausgebildet.

Um die Einbaurichtung für den Sensor zu erleichtern, ist vorgesehen, den äußeren Gehäuserand im Bereich der Verdickung der Wandung abzuflachen. Alternativ ist vorgesehen, die Abflachung auf der der Verdickung gegenüberliegenden Seite anzuordnen. Durch die Abflachung ist die richtige Einbaulage am Fahrzeug sofort erkennbar, so daß eine Fehljustierung vermieden wird.

Um die Sende- bzw Empfangskeule in einelnen Bereichen zu beeinflussen, sind mehrere nebeneinanderliegende zackenförmige Verdickungen der Gehäusewandung vorgesehen.

Wird die Schwingmembran keilförmig ausgebildet, dann kann die gesamte Sende- bzw. Empfangskeule in eine Vorzugsrichtung gelenkt werden. Dadurch wird auf einfache Weise eine Anpassung an schräg verlaufende Karrosserieteile erreicht, ohne daß der Sensor sich von der Oberfläche des Karrosserieteils abheben muß.

Der Sensor kann somit relativ unauffällig an dem Karrosserieteil montiert werden.

Anstelle eines runden Piezo-Elementes kann beispielsweise auch ein ovales oder etwa rechteckförmiges Piezo-Element auf der Schwingmembran angeordnet sein. Die Wahl des Piezo-Elementes bewirkt, daß die Amplitudenverteilung der Schwingmembran zusätzlich beeinflußt werden kann, um somit die gewünschte Ausformung der Sende-/Empfangskeule zu unterstützen. Diese Wirkung kann durch eine Anordnung verstärkt werden, die aus der Mittellinie verschoben ist. Die Maßnahmen sind besonders günstig für die Ausbildung des Sensors als Grundwellenschwinger.

### Zeichnung

In der Zeichnung sind mehrere Ausführungsbeispiele der Erfindung vorgeschlagen und in der nachfolgenden Beschreibung näher erläutert. Figur 1a und 1b zeigen ein erstes Ausführungsbeispiel in Draufsicht bzw. im Querschnitt, Figur 2a, 2b zeigt ein zweites Ausführungsbeispiel, Figur 3a, 3b zeigt ein drittes Ausführungsbeispiel, Figur 4a, 4b zeigt ein viertes Ausführungsbeispiel, Figur 5a, 5b zeigt ein fünftes Ausführungsbeispiel, Figur 6a, 6b zeigt ein sechstes Ausführungsbeispiel und Figur 7a, 7b, 7c zeigt ein siebtes Ausführungsbeispiel.

### Beschreibung

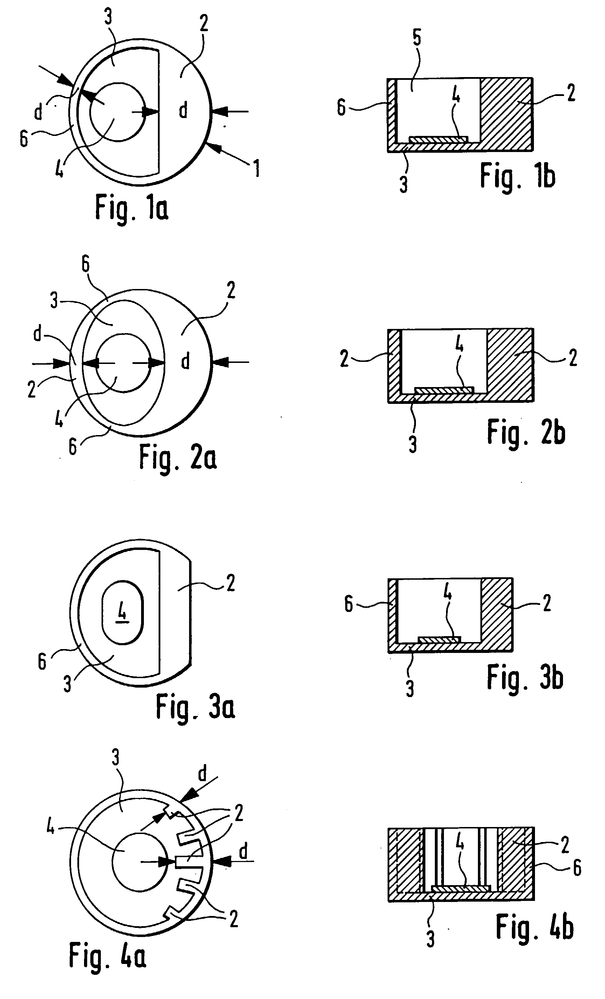

Figur 1a zeigt ein topfförmiges Wandlergehäuse 5 in Draufsicht (von der Rückseite). Es ist zylindrisch geformt und hat eine Wandung 6 sowie einen Topfboden, der als Schwingmembran 3 ausgebildet ist. Ein Teil der Wandung 6 hat eine segmentförmige Verdickung 2 mit einer maximalen Dicke d. Durch die Verdickung 2 wird erreicht, daß die für die Ausbildung einer Schwingung wirksame Fläche der Schwingmembran 3 verringert wird. Bei entsprechender Ausbildung der Fläche schwingt diese in Abhängigkeit von der Anregungsfrequenz in der Grundschwingung, so daß praktisch keine Oberwellen feststellbar sind. Bei dem Sensor 1 ist auf der Innenseite der Schwingmembran 3 ein Piezo-Element 4 aufgebracht. Das Piezo-Element 4 kann kreisrund oder auch rechteckförmig bzw. oval ausgebildet sein (Fig. 3a). Die Anordnung des Piezo-Elementes 4 ist dabei aus der Mittelachse des Wandlergehäuses 5 verschoben. Figur 1b zeigt diese Anordnung im Querschnitt. Dabei ist die Verdickung 2 einseitig ausgebildet.

Ein zweites Ausführungsbeispiel zeigt Figur 2a in Draufsicht. Hier sind gegenüberliegend an der Wandung zwei Verdickungen 2 vorgesehen, wobei deren größte Dicke d unterschiedlich ist. Dadurch ergibt sich ebenfalls eine exzentrische Verschiebung der Schwingmembran 3 bezogen auf die Mittelachse des Wandlergehäuses 5. Die Schwingmembran 3 ist durch die Formung der Verdickungen 2 beispielsweise oval ausgebildet. Zentrisch zur Schwingmembran 3 ist ein kreisrundes Piezo-Element 4 angeordnet. Figur 2b zeigt ähnlich wie bei Figur 1b einen Schnitt durch die Mittelachse, wobei rechts und links der Schwingmembran 3 die beiden Verdickungen 2 erkennbar sind.

Figur 3a zeigt in Draufsicht ein drittes Ausführungsbeispiel, bei dem die Wandung des topfförmigen Gehäuses an einer Stelle abgeflacht ist. An der abgeflachten Stelle ist eine Verdickung 2 vorgesehen. Das Piezo-Element 4 ist etwa rechteckförmig mit abgerundeten Ecken vorgesehen. Figur 3b zeigt einen Querschnitt mit der Verdickung 2 und der Wandung 6.

Figur 4a zeigt ein viertes Ausführungsbeispiel des erfindungsgemäßen Sensors, bei dem in einem vorgegebenen Bereich des Gehäuses zackenförmig ausgebildete Verdickungen 2 vorgesehen sind. Jeweils nebeneinanderliegende Verdickungen 2 weisen eine unterschiedliche Dicke d auf. Die Verdickungen d können alternativ auch gegenüberliegend angeordnet sein.

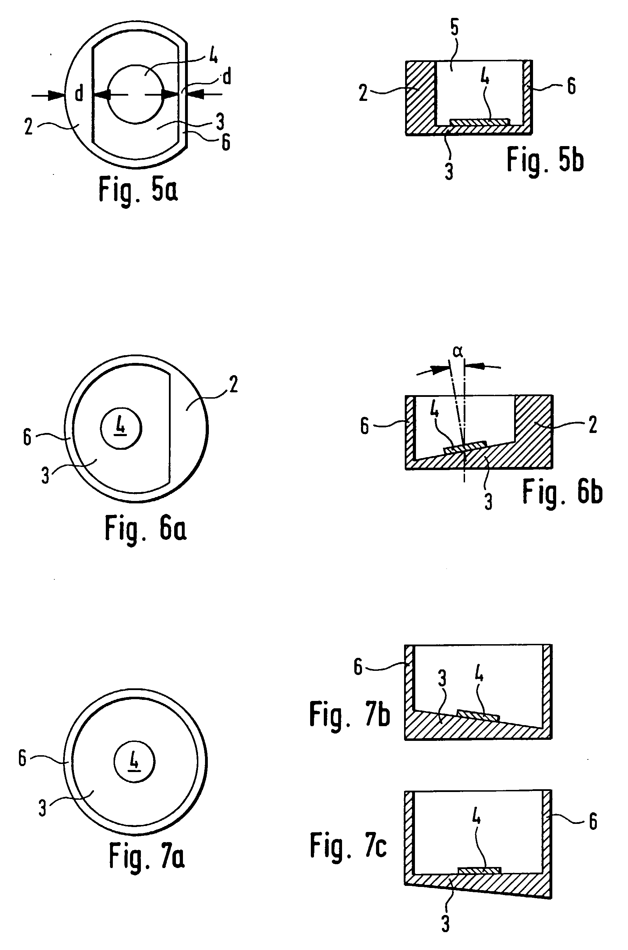

Figuren 5a und 5b zeigen Schnittbilder von einem fünften Ausführungsbeispiel der Erfindung. Wie der Figur 5a entnehmbar ist, ist eine Seite des topf- oder zylinderförmigen Wandlergehäuses 5 abgeflacht. An der gegenüberliegenden Seite ist eine Verdickung 2 mit der Dicke d vorgesehen. An dieser Seite ist die Verdickung d größer als die Dicke d der Wandung 6 auf der abgeflachten Seite. Figur 5b zeigt einen Querschnitt des Sensors.

Beim sechsten und siebten Ausführungsbeispiel gemäß den Figuren 6a, 6b, 7a, 7b und 7c ist die Schwingmembran 3 keilförmig ausgebildet. Die keilförmige Ausbildung ist insbesondere in den Figuren 6b, 7b und 7c gut erkennbar. Wie der Figur 6a entnehmbar ist, entspricht die keilförmige Schwingmembran 3 dem Ausführungsbeispiel gemäß der Figur 1a. Hier bewirkt die keilförmige Schwingmembran 3, daß durch die asymmetrische Gestaltung der Schwingmembran 3 zusätzlich noch eine bevorzugte Abstrahlrichtung vorgegeben wird, die senkrecht zum Piezo-Element 4 wirkt und von der Mittelachse des Wandlergehäuses 5 weggerichtet ist. Zwischen den beiden Achsen wird ein Winkel α gebildet. Die Keilform ist dabei so ausgebildet, daß eine Schrägefläche auf der Innenseite des Wandlergehäuses 5 angeordnet ist, während die Außenseite gegenüber der Wandung 6 rechtwinklig bleibt. Figur 7b zeigt ein ähnliches Beispiel, nur mit dem Unterschied, daß die gesamte Wandung - wie in Figur 7a dargestellt - am Umfang gleichmäßig dick ist.

Beim Ausführungsbeispiel der Figur 7c ist die Innenfläche des Wandlergehäuses 5 rechtwinklig ausgebildet, während die Schrägfläche an der Außenseite angebracht wird. Bei dieser Ausführungsform kann vorteilhaft eine Anpassung an Schrägflächen vorgesehen werden, die insbesondere an Außenteilen eines Kraftfahrzeugs, beispielsweise an der Stoßstange, auftreten.

In weiterer Ausgestaltung der Erfindung ist vorgesehen, die keilförmige Schwingmembran 5 auch bei den zuvor genannten Ausführungsbeispielen zu verwenden.

Die Wandlergehäuse 5 werden vorzugsweise aus Metall oder Kunststoff gefertigt. Bewährt haben sich Aluminiumlegierungen, die entsprechend gesintert werden. Als Piezo-Element werden handelsübliche Piezo-Stoffe wie Zinkoxid, keramische Werkstoffe oder Kunststoffe verwendet. Diese Piezo-Elemente werden mit elektrischen Anschlüssen versehen, die in den Figuren aus Übersichtlichkeitsgründen weggelassen wurden. Die Sensoren sind für die Abstandsmessung verwendbar, wie sie beispielsweise als Einparkhilfe für ein Kraftfahrzeug Verwendung finden.

Die in den Figuren dargestellten Ausführungsbeispiele sind nur schematisch wiedergegeben. Es ist zum Beispiel vorgesehen, die Außen- oder Innenflächen des topfförmigen Wandlergehäuses 5 leicht konisch auszubilden, um die Herstellung insbesondere beim Fließpressen durch leichteres Entformen zu vereinfachen. Ebenso ist vorgesehen, die Verdickungen 2 der Wandung und/oder die Schwingmembran 3 nach innen oder außen zu krümmen. Dadurch wird vorteilhaft die asymmetrische Formung der Sende- bzw. Empfangskeule unterstützt.

## Patentansprüche

1. Sensor zum Senden und/oder Empfangen akustischer Signale, insbesondere im Ultraschallbereich, mit einem topfförmigen Gehäuse, auf dessen Boden ein Schwingelement angeordnet ist und mit diesem eine Schwingmembran bildet, und mit wenigstens einer Verdickung der Wandung im Bereich der Schwingmembran, dadurch gekennzeichnet, daß die Dicke (d) der Wandung (6) an einer vorgegebenen Stelle größer ist als an den anderen Stellen der Wandung (6).

2. Sensor nach Anspruch 1, dadurch gekennzeichnet, daß am Innenrand der Wandung (6) eine segmentförmige Verdickung (2) derart angeordnet ist, daß die Grundfläche der Schwingmembran (3) ein Kreissegment bildet (Figur 1a).

3. Sensor nach Anspruch 1, dadurch gekennzeichnet, daß am Innenrand der Wandung (6) zwei gegenüberliegende Verdickungen (2) mit unterschiedlicher Wanddicke (d) angeordnet sind (Figur 2a).

4. Sensor nach Anspruch 1 oder 2, dadurch gekennzeichnet, daß im Bereich der Verdickung (2) der Wandung (6) der äußere Gehäuserand abgeflacht ist (Figur 3a).

5. Sensor nach Anspruch 1 oder 2, dadurch gekennzeichnet, daß der Gehäuserand an der der Verdickung (2) gegenüberliegenden Seite abgeflacht ist (Figur 5a).

6. Sensor nach Anspruch 1, dadurch gekennzeichnet, daß die Wandung (6) in einem vorgegebenen Bereich des Gehäuses (5) zackenförmig ausgebildete Verdickungen (2) mit unterschiedlicher Dicke (d) aufweist (Figur 4a).

7. Sensor nach einem der vorherigen Ansprüche, dadurch gekennzeichnet, daß die Schwingmembran (3) keilförmig ausgebildet ist.

8. Sensor nach einem der vorherigen Ansprüche, dadurch gekennzeichnet, daß das Schwingelement (4) auf der Schwingmembran (3) außermittig angeordnet ist.

9. Sensor nach einem der vorherigen Ansprüche, dadurch gekennzeichnet, daß das Schwingelement (4) ein kreisrundes oder ovales Piezo-Element ist.

10. Sensor nach einem der vorherigen Ansprüche, dadurch gekennzeichnet, daß der Sensor (1) an einem Außenteil, vorzugsweise an der Stoßstange eines Kraftfahrzeugs, angeordnet ist.
